# EUROPEAN PATENT APPLICATION

(11) **EP 4 467 580 A1**
(43) Date of publication of application: **27.11.2024**
(21) Application number: 22922279.9
(22) Date of filing: 21.02.2022
(51) Int. Cl.: C08F 220/18, C08F 220/30, C08F 212/08, C08K 3/04, H01M 4/62, H01M 4/139

(54) **DISPERSANT COMPRISING COPOLYMER, CATHODE FOR SECONDARY BATTERY COMPRISING DISPERSANT, AND SECONDARY BATTERY COMPRISING CATHODE**

(30) Priority: 21.01.2022 KR 20220009395; 16.02.2022 KR 20220020310
(71) Applicant: Hansol Chemical Co., Ltd, Seoul 06169 (KR)
(72) Inventor: EOM, Jin-Ju, Wanju-gun, Jeollabuk-do 55321 (KR); KIM, Kwang-In, Wanju-gun, Jeollabuk-do 55321 (KR); KIM, Chang-Beom, Wanju-gun, Jeollabuk-do 55321 (KR); KWON, Se-Man, Wanju-gun, Jeollabuk-do 55321 (KR); HAN, Jae-Hee, Wanju-gun, Jeollabuk-do 55321 (KR)
(74) Representative: Louis Pöhlau Lohrentz
(86) International application number: PCT/KR2022/002501
(87) International publication number: WO 2023/140418

(57) **Abstract**

The present invention relates to a copolymer satisfying Equation 1 below in a linear sweep voltammetry measurement in which a voltage is applied from 0 V to 6 V at a speed of 0.5 mV/s, a dispersant comprising the copolymer, a dispersion solution, a slurry composition for a cathode, a cathode, and a secondary battery. [Equation 1] 0≤(current value measured at applied voltage of 4.2 V-measured current value at applied voltage of 3 V)/(current value measured at applied voltage of 3 V)≤3.

## Description

### Technical Field

The present disclosure relates to a copolymer dispersant, a dispersion liquid using the same, a cathode slurry composition, a cathode, and a secondary battery. In particular, the copolymer dispersant may increase the dispersibility of carbon nanomaterials, especially such as carbon nanotubes, even with only a small amount of use.

### Background Art

Carbon materials have unique mechanical, electrical, and thermal properties, so carbon materials are used in various fields such as electronics, biotechnology, and medicine. Recently, carbon nanomaterials such as carbon nanotubes, fullerenes, and graphene have been gaining attention in addition to existing carbon materials such as graphite, activated carbon, and carbon black.

Meanwhile, for efficient carbon material use, the carbon materials are required to be effectively dispersed in a matrix of various materials.

However, carbon materials, especially carbon nanomaterials, tend to aggregate with each other within the matrix due to strong Van der Waals forces. When the carbon materials aggregate within the matrix, the carbon materials cannot demonstrate their unique properties, and uniformity may be reduced.

Methods of dispersing carbon materials include mechanical dispersion using physical forces (for example, ultrasonic waves, milling, and high shear force), dispersion using dispersants, and dispersion by surface modification.

However, mechanical dispersion and dispersion by surface modification easily cause damage to the carbon materials, and such damage significantly reduces the natural properties of the carbon materials (for example, electrical conductivity, thermal conductivity, and so on).

Therefore, the dispersion of carbon materials using dispersants is being actively researched. In particular, to efficiently disperse carbon nanomaterials such as carbon nanotubes, research has been intensively conducted in a way that the carbon nanomaterials are wrapped with a polymer dispersant. Alternatively, research has been done in a way that π-π interaction is used between the p orbital of the aromatic ring of the polymer dispersant and the p orbital of the carbon nanomaterials.

However, there are still not many dispersants that may efficiently disperse carbon materials, especially carbon nanomaterials while maintaining the unique properties of the carbon materials, and research on this issue is required.

### [Related Art Document]

### [Patent Document]

(Patent document 1) United States Patent No. 7,655,708

### Disclosure

### Technical Problem

Accordingly, an objective of the present disclosure is to provide a copolymer dispersant that may efficiently disperse carbon materials (especially carbon nanomaterials) with only a small amount of use.

In addition, another objective is to provide a dispersion liquid using the copolymer dispersant and a secondary battery with a low resistance and an electrode slurry with a high solid content by using the dispersion liquid.

However, the problems to be solved by the present disclosure are not limited to the problems mentioned above, and other problems not mentioned will be clearly understood by those skilled in the art from the description below.

### Technical Solution

One aspect of the present disclosure provides a copolymer [16] which fulfills the criterion outlined in Expression 1 below in a linear sweep voltammetry measurement in which an applied voltage is increased from 0 to 6 V at a rate of 0.5 mV/s. 0 ≤ (current value measured at applied voltage of 4.2 V - current value measured at applied voltage of 3 V)/(current value measured at applied voltage of 3 V) ≤ 3

Another aspect of the present disclosure provides a dispersant including
the copolymer.

Yet another aspect of the present disclosure provides a dispersion liquid including
the copolymer; and
a solvent.

Yet another aspect of the present disclosure provides a slurry composition for cathodes including
the copolymer; and
a cathode active material.

Yet another aspect of the present disclosure provides a cathode including
a current collector; and
a cathode active material layer containing the copolymer formed on the current collector.

Yet another aspect of the present disclosure provides a secondary battery including
the cathode.

### Advantageous Effects

The copolymer according to the present disclosure is effective in efficiently dispersing carbon materials (particularly, carbon nanomaterials) as a dispersant with only a small amount.

In addition, the dispersion liquid using the dispersant of the present disclosure can be used in various fields (for example, batteries, capacitor electrodes, and so on) that require carbon material dispersion, and in particular, the dispersion liquid can be used in the cathode of secondary batteries to improve the performance of secondary batteries.

### Best Mode

Hereinafter, the operation and effects of the disclosure will be described in more detail through specific embodiments of the disclosure. However, these embodiments are merely presented as embodiments of the disclosure, and the scope of the disclosure is not determined by the embodiments.

Prior to the description, terms and words used in this specification and claims should not be construed as limited to their usual or dictionary meanings. Based on the principle that the inventors may appropriately define the concept of the terms to explain his or her disclosure in the best way, the terms and words are required to be interpreted as meaning and concepts consistent with the technical idea of the present disclosure.

Thus, the configuration of the embodiment described in this specification is only one of the most preferred embodiments of the present disclosure and does not represent the entire technical idea of the present disclosure, so it should be understood that at the time of filing this application, there may be various equivalents and modifications that can replace the embodiments.

In this specification, singular expressions include plural expressions, unless the context clearly dictates otherwise. In this specification, terms such as "include", "comprise", or "have" are intended to designate the presence of implemented features, numbers, steps, components, or a combination thereof. The terms should be understood as not precluding the possibility of the presence or addition of one or more other features, numbers, steps, components, or combinations thereof.

In this specification, the terms "a to b" and "a~b" representing numerical ranges are defined as ≥ a and ≤ b.

In one aspect of the present disclosure, a copolymer may fulfill the criterion outlined in Expression 1 in a linear sweep voltammetry measurement in which an applied voltage is increased from 0 to 6V at a rate of 0.5 mV/s. 0 ≤ (current value measured at applied voltage of 4.2 V - current value measured at applied voltage of 3 V)/(current value measured at applied voltage of 3 V) ≤ 3

When a copolymer used in lithium secondary batteries is employed as an insulator instead of a separator, and a half cell with lithium is manufactured as the counter electrode, then linear sweep voltammetry measurements reveal a current change at approximately 2 to 2.5 V attributed to lithium metal, and the current begins to stabilize at around 3 V. When a large change in current is measured at 3 V or more, it may be determined that the copolymer has caused a side reaction, which harms the performance of the lithium secondary battery.

In addition, electrolyte decomposition usually begins at a voltage of 4.3 V, so whether the change in current is due to the copolymer used in lithium secondary batteries is difficult to confirm at 4.3 V or more.

Therefore, the electrochemical stability of the copolymer and the resultant effect on the performance of the lithium secondary battery may be determined through the difference between the current values measured at 3 V and 4.2 V.

When a copolymer that does not fulfill the range criterion outlined in Expression 1 above is used, the performance of the secondary battery may be reduced due to the low electrochemical stability of the copolymer.

According to one embodiment, the copolymer may include one or more monomer units selected from the group consisting of acrylate-based monomer units containing one or more substituted or unsubstituted aromatic rings and vinyl-based monomer units containing one or more substituted or unsubstituted aromatic rings, acrylate-based monomer units containing linear or branched aliphatic hydrocarbons having 5 to 22 carbon atoms, and polar monomer units containing one or more selected from the group consisting of cyano (CN), pyrrolidone (NC₄H₆O), carboxylic acid (COOH), caprolactam (C₅H₁₀CNO), morpholine (C₄H₈NO), and oxazolidone (C₃H₄NO₂).

In addition, based on 100 mol% of the copolymer, the copolymer may include 5 mol% or more and 60 mol% or less of one or more monomer units selected from the group consisting of acrylate-based monomer units containing one or more substituted or unsubstituted aromatic rings and vinyl-based monomer units containing one or more substituted or unsubstituted aromatic rings, 5 mol% or more and 80 mol% or less of acrylate-based monomer units containing linear or branched aliphatic hydrocarbons having 5 to 22 carbon atoms, and 5 mol% or more and 60 mol% or less of polar monomer units containing one or more selected from the group consisting of cyano (CN), pyrrolidone (NC₄H₆O), carboxylic acid (COOH), caprolactam (C₅H₁₀CNO), morpholine (C₄H₈NO), and oxazolidone (C₃H₄NO₂).

According to another embodiment, the copolymer may be represented by Formula 1 below.

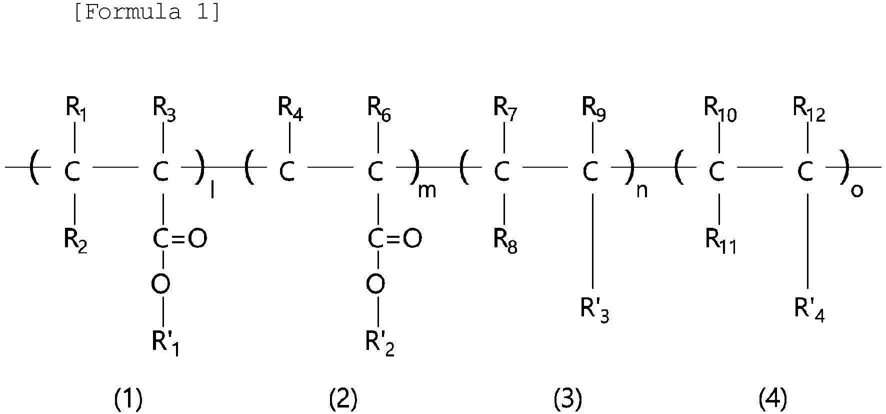

In the Formula 1 above,
R₁ to R₁₂ are the same or different from each other, and R₁ to R₁₂ are each independently hydrogen or a linear or branched hydrocarbon having 1 to 4 carbon atoms.
R'₁ is a linear or branched aliphatic hydrocarbon having 5 to 22 carbon atoms.
R'₂ includes one or more substituted or unsubstituted aromatic rings.
R'₃ is one or more selected from a group consisting of cyano (CN), pyrrolidone (NC₄H₆O), carboxylic acid (COOH), caprolactam (C₅H₁₀CNO), morpholine (C₄H₈NO), and oxazolidone (C₃H₄NO₂).
R'₄ includes one or more substituted or unsubstituted aromatic rings.
5 mol%≤l≤80 mol%, 0 mol%≤m≤60 mol%, 5 mol%≤n≤60 mol%, and 0 mol%≤o≤60 mol%.

### (However, both m and o cannot be 0 mol%)

One or more of m and o in Formula 1 is required to exceed 0 mol%.

That is, the monomer unit (1) shown in Formula 1 may correspond to acrylate-based monomer units containing linear or branched aliphatic hydrocarbons having 5 to 22 carbon atoms. The monomer unit (2) shown in Formula 1 may correspond to acrylate-based monomer units containing one or more substituted or unsubstituted aromatic rings. The monomer unit (3) shown in Formula 1 may correspond to polar monomer units containing one or more selected from the group consisting of cyano (CN), pyrrolidone (NC₄H₆O), carboxylic acid (COOH), caprolactam (C₅H₁₀CNO), morpholine (C₄H₈NO), and oxazolidone (C₃H₄NO₂). The monomer unit (4) shown in Formula 1 may correspond to vinyl-based monomer units containing one or more substituted or unsubstituted aromatic rings.

According to yet another embodiment, R'₁ shown in the Formula 1 may be one or more selected from the group consisting of n-pentyl, n-hexyl, n-heptyl, n-octyl, 2-ethylhexyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-icosyl, n-henicosyl, n-docosyl, iso-pentyl, iso-heptyl, iso-octyl, iso-nonyl, iso-decyl, iso-undecyl, iso-dodecyl, iso-tridecyl, iso-tetradecyl, iso-pentadecyl, iso-cetyl, iso-hexadecyl, iso-heptadecyl, iso-stearyl, iso-octadecyl, iso-nonadecyl, iso-icosyl, iso-henicosyl, and iso-docosyl.

That is, as the monomer containing R'₁, only one type of monomer containing linear or branched aliphatic hydrocarbons having 5 to 22 carbon atoms may be used, or two or more types of the monomer containing linear or branched aliphatic hydrocarbons having 5 to 22 carbon atoms may be used.

The acrylate-based monomers containing linear or branched aliphatic hydrocarbons having 5 to 22 carbon atoms may be an acrylate and/or methacrylate, both containing linear or branched aliphatic hydrocarbons having 5 to 22 carbon atoms. The acrylate-based monomers containing one or more substituted or unsubstituted aromatic rings may be acrylate and/or methacrylate, both containing one or more substituted or unsubstituted aromatic rings.

### (Meth)acrylate refers to an acrylate or methacrylate.

For example, the acrylate-based monomers containing linear or branched aliphatic hydrocarbons having 5 to 22 carbon atoms may be n-pentyl (meth)acrylate, n-heptyl (meth)acrylate, n-octyl (meth)acrylate, 2-ethylhexyl (meth)acrylate, n-nonyl (meth)acrylate, n-decyl (meth)acrylate, n-undecyl (meth)acrylate, lauryl (meth)acrylate, n-dodecyl (meth)acrylate, n-tridecyl (meth)acrylate, n-tetradecyl (meth)acrylate, n-pentadecyl (meth)acrylate, cetyl (meth)acrylate, n-hexadecyl (meth)acrylate, n-heptadecyl (meth)acrylate, stearyl (meth)acrylate, n-nonadecyl (meth)acrylate, n-eicosyl (meth)acrylate, n-heneicosyl (meth)acrylate, n-dococyl (meth)acrylate, iso-pentyl (meth)acrylate, iso-heptyl (meth)acrylate, iso-octyl (meth)acrylate, iso-nonyl (meth)acrylate, iso-decyl (meth)acrylate, iso-undecyl (meth)acrylate, iso-dodecyl (meth)acrylate, iso-tridecyl (meth)acrylate, iso-tetradecyl (meth)acrylate, iso-pentadecyl (meth)acrylate, iso-cetyl (meth)acrylate, iso-hexadecyl (meth)acrylate, iso-heptadecyl (meth)acrylate, iso-stearyl (meth)acrylate, iso-nonadecyl (meth)acrylate, iso-eicosyl (meth)acrylate, iso-heneicosyl (meth)acrylate, and iso-docosyl (meth) acrylate, or a copolymer thereof, but is not limited thereto.

The monomer units containing linear or branched aliphatic hydrocarbons having 5 to 22 carbon atoms may serve to disperse the carbon materials (in particular, carbon nanomaterials such as carbon nanotubes) by wrapping the carbon materials and to lower the viscosity of the dispersion liquid.

When the linear or branched aliphatic hydrocarbons of the monomer units have less than 5 carbon atoms, the carbon materials (especially carbon nanotubes) cannot be sufficiently wrapped, and thus the dispersion ability may be reduced, meanwhile when the linear or branched aliphatic hydrocarbons of the monomer units have more than 22 carbon atoms, the compatibility between the monomer units and a polar solvent such as NMP may be significantly reduced.

In addition, the monomer units containing linear or branched aliphatic hydrocarbons having 5 to 22 carbon atoms may be contained in an amount of 5 to 80 mol% based on 100 mol% of the entire copolymer.

When the content of the monomer units containing linear or branched aliphatic hydrocarbons having 5 to 22 carbon atoms is less than 5 mol%, the particle size and viscosity of the dispersion liquid may increase. When the content is more than 80 mol%, the compatibility between the monomer units and polar solvent decreases, leading to potential phase separation.

According to yet another embodiment, R'₂ and R'₄ shown in Formula 1 are the same or different from each other. R'₂ and R'₄ may each independently include one or more selected from the group consisting of substituted or unsubstituted benzyl, phenyl, phenoxy, naphthalene, anthracene, and pyrene.

For example, R'₂ may be one or more selected from the group consisting of 3-phenoxy benzyl, σ-phenyl phenoxy ethyl, biphenyl methyl, 1-naphthyl, 2-naphthyl, 9-anthracene methyl, and 1-pyrene methyl but is not limited thereto. R'₄ may be phenyl but is not limited thereto.

That is, R'₂ and R'₄ are the same or different from each other. R'₂ and R'₄ may each independently include one or more substituted or unsubstituted aromatic rings.

Meanwhile, R'₂ may be a hydrocarbon containing one or more substituted or unsubstituted aromatic rings.

In addition, as the monomer containing R'₂, only one type of monomer containing one or more substituted or unsubstituted aromatic rings may be used, or two or more types of monomers containing one or more substituted or unsubstituted aromatic rings may be used.

For example, when the aromatic rings are substituted, a substituent may be a linear or branched hydrocarbon with 1 to 4 carbon atoms or a substituent connected through oxygen (O) (for example, substituted or unsubstituted aromatic rings connected through ether).

According to yet another embodiment, the monomer containing R'₂ may be one or more selected from the group consisting of benzyl acrylate, 3-phenoxy benzyl acrylate, σ-phenyl phenoxy ethyl acrylate, σ-phenyl phenoxy ethyl methacrylate, (1-pyrene) 2-methyl-2-propenoate, 1-naphthyl acrylate, 1-naphthyl methacrylate, 2-naphthyl acrylate, 2-naphthyl methacrylate, 9-anthracene methyl acrylate, and 9-anthracene methyl methacrylate. The monomer containing R'₄ may be styrene.

The monomer units containing one or more substituted or unsubstituted aromatic rings play a dispersing role through π-π interaction with the carbon materials (in particular, carbon nanomaterials such as carbon nanotubes), and the compatibility between the monomer units and a polar solvent such as NMP may be obtained.

The monomer units containing the one or more substituted or unsubstituted aromatic rings may be contained in an amount of 5 to 60 mol% based on 100 mol% of the entire copolymer.

When the content of the monomer unit containing the one or more substituted or unsubstituted aromatic rings is more than 60 mol%, the content of the aliphatic hydrocarbon or polar monomer unit may decrease, increasing the viscosity of the dispersion liquid and increasing the particle size of the dispersed carbon materials.

The polar monomer units containing one or more selected from the group consisting of cyano (CN), pyrrolidone (NC₄H₆O), carboxylic acid (COOH), caprolactam (C₅H₁₀CNO), morpholine (C₄H₈NO), and oxazolidone (C₃H₄NO₂) may serve to have compatibility with a polar solvent such as NMP.

For example, the polar monomer units containing one or more selected from the group consisting of cyano (CN), pyrrolidone (NC₄H₆O), carboxylic acid (COOH), caprolactam (C₅H₁₀CNO), morpholine (C₄H₈NO), and oxazolidone (C₃H₄NO₂) may be acrylic acid, methacrylic acid, acrylonitrile, N-vinylpyrrolidone, N-vinyl caprolactam, 4-acryolyl morpholine, and 3-acryloyl-2-oxazolidinone, or a copolymer thereof.

The polar monomer units may be contained in an amount of 5 to 60 mol% based on 100 mol% of the entire copolymer.

When the content of the polar monomer units is more than 60 mol% based on 100 mol% of the entire copolymer, the compatibility between the polar monomer units and a polar solvent becomes too high, which may cause phase separation after dispersion and may increase the particle size of the dispersed carbon materials.

According to yet another embodiment, the copolymer may be a random or block copolymer depending on the synthesis process.

According to yet another embodiment, the copolymer may have a number average molecular weight in a range of 8,000 or more and 40,000 or less.

When the number average molecular weight of the copolymer is less than 8,000, the fluidity of the dispersant may increase and the ability to prevent re-agglomeration of the carbon materials may decrease. When the number average molecular weight is more than 40,000, the viscosity may be too high for use.

In another aspect of the present disclosure, a dispersant may include the copolymer.

In yet another aspect of the present disclosure, a dispersion liquid may include the copolymer and a solvent.

According to one embodiment, the solvent may be a polar solvent, for example, may be one or more selected from the group consisting of N-methyl-2-pyrrolidone (NMP), N-ethyl-2-pyrrolidone (NEP), dimethylformamide (DMF), dimethylacetamide (DMAc), dimethyl sulfoxide (DMSO), γ-butyrolactone, ethyl acetate, propyl acetate, ethanol, isopropyl alcohol, and deionized water.

According to another embodiment, the dispersion liquid may further include carbon materials. The carbon materials may be one or more selected from the group consisting of graphite, activated carbon, carbon black, carbon nanotubes, fullerene, or graphene, but are not limited thereto.

The carbon nanotubes may be single-walled carbon nanotubes, multi-walled carbon nanotubes, or a combination thereof.

Meanwhile, the dispersant may be contained in the dispersion liquid in an amount of 0.1 to 0.5 times the content of the carbon materials.

When the content of the dispersant is less than 0.1 times the content of the carbon materials, a sufficient dispersing effect may not be obtained and the carbon materials may not be dispersed efficiently.

In addition, when the content of the dispersant is more than 0.5 times the carbon materials, the ratio of auxiliary materials in the battery increases, which may reduce energy density.

The copolymer dispersant of the present disclosure has excellent dispersion ability, so it is possible to prepare a dispersion liquid of carbon materials (especially carbon nanotubes) having an even and dense particle size.

Meanwhile, based on 100% by weight of the dispersion liquid, the carbon materials (particularly, carbon nanotubes) may be contained in an amount of 1% to 10% by weight.

When the content of the carbon materials in the dispersion liquid is less than 1% by weight, the solid content of the electrode slurry is low. When the content of the carbon materials is more than 10% by weight, the viscosity is very high and dispersion is poor, making it difficult to prepare a high-quality dispersion liquid.

Based on the excellent dispersion ability, the copolymer dispersant of the present disclosure may help reduce the particle size of carbon nanotubes in the dispersion liquid, lower the viscosity of the dispersion liquid, and shorten the dispersion process time.

According to yet another embodiment, when the dispersion liquid has a solid content of 1.5% by weight , the viscosity of the dispersion liquid at a shear rate of 10/s may be in a range of 2,000 cps or less. In addition, the single-walled carbon nanotubes, the multi-walled carbon nanotubes, or a combination thereof dispersed in the dispersion liquid may has a median particle size (D50) of 6 µm or less.

In yet another aspect of the present disclosure, a cathode slurry composition may include the copolymer and a cathode active material.

In the cathode slurry composition, the carbon nanotubes may be contained in an amount of 0.001 to 0.1 times, preferably 0.003 to 0.02 times the amount of the cathode active material.

When the content of carbon nanotubes is less than 0.001 times the content of the cathode active material, the conductivity in the electrode active material decreases and the output properties deteriorate. When the content of carbon nanotubes is more than 0.1 times the content of the cathode active material, the content of the cathode active material may be lowered and the capacity of the battery may be reduced.

The cathode active material for forming an electrode used in the present disclosure may be any cathode active material available in the art. The cathode active material may be, for example, lithium metal; lithium cobalt-based oxides such as LiCoO₂; lithium manganese-based oxides such as Li₁₊ₓMn₂₋ₓO₄ (where x is 0 to 0.33), LiMnO₃, LiMn₂O₃, and LiMnO₂; lithium copper oxides such as Li₂CuO₂; vanadium oxides such as LiV₃O₈, V₂O₅, Cu₂V₂O₇; lithium nickel-based oxides described as LiNi₁₋ₓM ₓO₂ (where M=Co, Mn, Al, Cu, Fe, Mg, B, or Ga, and x=0.01 to 0.3); lithium manganese complex oxides described as LiMn₂₋ₓMₓO₂ (where M=Co, Ni, Fe, Cr, Zn, or Ta, and x=0.01 to 0.1) or Li₂Mn₃MO₈ (where M=Fe, Co, Ni, Cu, or Zn); lithium-nickel-manganese-cobalt oxides described as Li(NiₐCo_{b}Mn_{c})O₂ (where 0<a<1, 0<b<1, 0<c<1, and a+b+c=1) ; phosphate such as LiFePO₄, LiMnPO₄, LiCoPO₄, and LiNiPO₄; and Fe₂(MoO₄)₃, but is not limited thereto.

At this time, the cathode active material layer may further include a binder, conductive material, filler, and other additives in addition to the cathode active material.

The cathode active material may be contained in an amount of 90% to 99% by weight based on 100% by weight of the solid content of the electrode slurry. When the content of the active material is low, the battery cannot produce high capacity. When the content of the active material is too high, the content of the binder and conductive material is relatively low, so electrode adhesion and conductivity may decrease.

The conductive material is not particularly limited and may be appropriately selected depending on the type of battery or capacitor. For example, carbon such as graphite and activated carbon may be used for lithium-ion secondary batteries meanwhile, cobalt oxide, cathode contains nickel powder, cobalt oxide, titanium oxide, and carbon may be used for nickel-hydrogen secondary batteries.

The carbon may include acetylene black, furnace black, graphite, carbon fiber, and fullerene derivatives.

The amount of the conductive material used is usually in a range of 1 to 20 parts by weight, preferably 2 to 10 parts by weight, based on 100 parts by weight of electrode active material.

As the content of the conductive material is reduced and the content of the cathode active material is increased, the energy density of the secondary battery may be improved, so it is important to achieve high efficiency even when using the same amount of conductive material.

The smaller and more uniformly dispersed the conductive material used in the electrode slurry for secondary batteries is, the higher the conductive efficiency is, lowering the resistance within the battery, showing improved output properties, and improving lifespan properties. When the conductive material is large and unevenly dispersed, the binding properties and conductivity are lowered even when the same amount of the conductive material is used, which harms the lifespan and output properties of the battery. In addition, when the viscosity of the dispersion liquid is low, the electrode production speed may be elevated by increasing the solid content of the electrode slurry.

The binder for cathodes of secondary batteries may be any one or two or more types selected from the group consisting of poly(meth)acrylic acid, poly(meth)acrylamide, carboxymethylcellulose, polyvinylidenefluoride, copolymer of polyhexafluoropropylene-polyvinylidene fluoride (P(VdF/HFP)), poly(vinyl acetate), polyvinylalcohol, polyethyleneoxide, polyvinylpyrrolidone, alkylated polyethyleneoxide, polyvinylether, poly(methyl methacrylate), poly(ethyl acrylate), polytetrafluoroethylene, polyvinylchloride, polyacrylonitrile, polyvinylpyridine, styrene-butadiene rubber, and acrylonitrile-butadiene rubber, and copolymers thereof, but is not limited thereto.

The content of the binder in the cathode slurry composition is preferably in a range of 0.3% by weight or more and 10% by weight or less, more preferably 0.7% by weight or more and 8% by weight or less based on 100% by weight of the solid content of the electrode slurry. When the content is less than 0.3% by weight, it is difficult to expect sufficient binding force in the current collector and electrode composition. When the content is more than 10% by weight, the binder proportion in the electrode slurry composition increases, which may reduce battery capacity.

In yet another aspect of the present disclosure, a cathode may include a current collector; and a cathode active material layer containing a copolymer formed on the current collector.

The cathode may be manufactured by (a) preparing a composition for forming a cathode active material layer containing a cathode active material and a copolymer of the present disclosure and (b) applying the composition for forming a cathode active material layer on a cathode current collector and then drying the composition.

The composition for forming a cathode active material layer may be mixed in a conventional manner using a conventional mixer, such as a high-speed shear mixer or homo-mixer.

The application and drying of the composition in the step (b) is about manufacturing a cathode for a lithium secondary battery by applying the composition for forming a cathode active material layer prepared in the step (a) on the cathode current collector and drying the composition.

At this time, the method of applying the composition for forming a slurry-type positive active material layer is not limited, for example, the method may include doctor blade coating, dip coating, gravure coating, slit die coating, spin coating, comma coating, bar coating, reverse roll coating, screen coating, and cap coating methods for the cathode manufacturing.

After the application and drying of the composition, a cathode for secondary batteries (particularly, lithium secondary batteries) with a finally formed cathode active material layer may be manufactured.

The current collector may be used as long as the current collector has conductivity and does not chemically react with the slurry, which is for forming an electrode. Representative current collectors include aluminum foil and copper foil. Current collectors with a thickness in a range of 3 to 50 micrometers may be selected and used.

In yet another aspect of the present disclosure, a secondary battery may include the cathode.

The secondary battery of the present disclosure has an AC resistance of 30 Q or less. When the secondary battery repeats 300 cycles of charging and discharging, the battery capacity retention rate may be in a range of 80% or more, the average charge voltage may be in a range of 3.75 V or less, and the average discharge voltage may be in a range of 3.73 V or more.

A secondary battery made of a cathode containing the copolymer of the present disclosure, anode, separator, and electrolyte solution may be manufactured.

The separator is required to be an insulator to separate the anode and cathode, and also to provide a passage through which only lithium ions may move. For this, the separator is required to have good electrolyte wettability, and also porous polymer films such as PE/PP and porous non-woven fabric are used for the separator. To prevent battery short circuits, a coated separator, which is coated with ceramics having enhanced heat resistance and mechanical strength, may be utilized, and the separator may be coated in single or multiple layers.

The separator may be made of a porous substrate. The porous substrate may be any porous substrate commonly used in electrochemical devices. For example, a polyolefin-based porous membrane or non-woven fabric may be used for the porous substrate, but the material for the porous substrate is not particularly limited thereto.

The separator may be a porous substrate made of any one selected from the group consisting of polyethylene, polypropylene, polybutylene, polypentene, polyethylene terephthalate, polybutylene terephthalate, polyester, polyacetal, polyamide, polycarbonate, polyimide, polyetheretherketone, polyethersulfone, polyphenylene oxide, polyphenylene sulfide, and polyethylene naphthalate, or a mixture of two or more types thereof.

The electrolyte of the lithium secondary battery is a non-aqueous electrolyte containing lithium salt, and the electrolyte is made of lithium salt and solvent. The solvent used include a non-aqueous organic solvent, organic solid electrolyte, and inorganic solid electrolyte.

The lithium salt is easily soluble in the non-aqueous electrolyte solution, for example, the lithium salt may include LiCl, LiBr, LiI, LiClO₄, LiBF₄, LiB₁₀Cl₁₀, LiPF₆, LiAsF₆, LiSbF₆, LiAlCl₄, LiSCN, LiC₄BO₈, LiCF₃CO₂, LiCH₃SO₃, LiCF₃SO₃, LiN(SO₂CF₃)₂, LiN(SO₂F)₂, LiN(SO₂C₂F₅)₂, LiC₄F₉SO₃, LiC(CF₃SO₂)₃, (CF₃SO₂)·2NLi, lithium chloroborane, lithium lower aliphatic carboxylate, and lithium tetraphenyl borate imide.

The non-aqueous organic solvent may be an aprotic organic solvent such as N-methyl-2-pyrrolidone, propylene carbonate, ethylene carbonate, butylene carbonate, dimethyl carbonate, diethyl carbonate, ethylmethyl carbonate, gamma-butyrolactone, 1,2-dimethoxy ethane, 1,2-diethoxy ethane, tetrahydroxy franc, 2-methyl tetrahydrofuran, dimethyl sulfoxide, 1,3-dioxolane, 4-methyl-1,3-dioxene, diethyl ether, formamide, dimethylformamide, dioxolane, acetonitrile, nitromethane, methyl formate, methyl acetate, phosphate triester, trimethoxy methane, dioxolane derivatives, sulfolane, methylsulfolane, 1,3-dimethyl-2-imidazolidinone, propylene carbonate derivatives, tetrahydrofuran derivatives, ethers, methyl propionate, and ethyl propionate.

The organic solid electrolyte may include polyethylene derivatives, polyethylene oxide derivatives, polypropylene oxide derivatives, phosphoric acid ester polymers, poly agitation lysine, polyester sulfide, polyvinylalcohol, poly vinylidene fluoride, and polymers containing secondary dissociation groups.

The inorganic solid electrolyte may include lithium nitrides (for example, Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂), halides, and sulfates.

In addition, the non-aqueous electrolyte may further include other additives to improve charge/discharge properties and flame retardancy. The other additives may include pyridine, triethyl phosphite, triethanolamine, cyclic ether, ethylene diamine, n-glyme, hexaphosphate triamide, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethanol, aluminum trichloride, fluoroethylene carbonate (FEC), propene sultone (PRS), and vinylene carbonate (VC).

When manufacturing a lithium secondary battery according to the present disclosure, in addition to winding, which is a common process, lamination stack and folding processes of separators and electrodes may be applied. The battery case may be cylindrical, prismatic, pouch-shaped, or coin-shaped.

Utilizing the small and uniformly dispersed carbon nanotube dispersion liquid disclosed herein, lithium secondary batteries may exhibit improved capacity retention and lifespan properties. In addition, these lithium secondary batteries may be used in small to medium to large models such as automobiles and electronic devices.

### Mode for Disclosure

Hereinafter, the present disclosure will be described in more detail using examples, but the present disclosure is not limited thereto.

### [Example 1-1]

42 g of 3-phenoxy benzyl acrylate (PBA), 52 g of stearyl acrylate (SA), 6 g of acrylic acid (AA), and 70 g of N-methyl pyrrolidone (NMP) was placed in a 5-neck flask reactor. The 5-neck flask reactor was equipped with a reflux condenser and thermometer. Thereafter, the temperature of the flask reactor was raised until the temperature reached 75°C while nitrogen purging was performed.

Next, 0.15 g of 2,2'-azobis-2,4-dimethyl valeronitrile (V-65) was dissolved in 20 g of N-methyl pyrrolidone, and then the lysate was dropped over 30 minutes.

After the completion of the dropping, the mixture was maintained at a temperature of 75°C for 7 hours. Thereafter, 0.15 g of V-65 dissolved in 10 g of N-methyl pyrrolidone was further dropped over 30 minutes and maintained at a temperature of 75°C for 7 hours to synthesize a dispersant with a solid content of 50% and a number average molecular weight of approximately 14,000 g/mol.

### [Example 1-2]

A dispersant was synthesized in the same manner as Example 1-1, except that the reaction temperature was lowered to 70°C and the number average molecular weight of the dispersant was adjusted to about 20,000.

### [Example 1-3]

A dispersant was synthesized in the same manner as Example 1-1, except that the reaction temperature was lowered to 65°C and the number average molecular weight of the dispersant was adjusted to about 32,000.

### [Example 1-4]

A dispersant was synthesized in the same in the same manner as Example 1-1, except that 60 g of stearyl acrylate, 26 g of styrene, and 14 g of acrylic acid were used as monomers instead of 42 g of 3-phenoxybenzyl acrylate, 52 g of stearyl acrylate, and 6 g of acrylic acid.

### [Example 1-5]

A dispersant was synthesized in the same manner as Example 1-1, except that 46 g of 3-phenoxybenzyl acrylate, 46 g of lauryl acrylate (LA), and 8 g of acrylic acid were used as monomers instead of 42 g of 3-phenoxybenzyl acrylate, 52 g of stearyl acrylate, and 6 g of acrylic acid.

### [Comparative Example 1-1]

A dispersant was synthesized in the same manner as Example 1-1, except that the reaction temperature was elevated to 85°C and the number average molecular weight was adjusted to about 5,000.

### [Comparative Example 1-2]

A dispersant was synthesized in the same manner as Example 1-1, except that the reaction temperature was lowered to 65°C and 0.05 g of 2,2'-azobis-2,4-dimethyl valeronitrile was added twice to adjust the number average molecular weight of the dispersant to about 50,000.

### [Comparative Example 1-3]

A dispersant was synthesized in the same manner as Example 1-1, except that 46 g of 3-phenoxybenzyl acrylate, 70 g 3-phenoxybenzyl acrylate, and 30 g acrylic acid were used instead of 42 g of 3-phenoxybenzyl acrylate, 52 g of stearyl acrylate, and 6 g of acrylic acid.

### [Comparative Example 1-4]

A dispersant was synthesized in the same manner as Example 1-1, except that 45 g 3-phenoxy benzyl acrylate, 50 g butyl acrylate (BA), and 5 g acrylic acid were used instead of 42 g of 3-phenoxybenzyl acrylate, 52 g of stearyl acrylate, and 6 g of acrylic acid.

The composition, composition ratio, and reaction conditions of Examples 1-1 to 1-5 and Comparative Examples 1-1 to 1-4 are shown in Table 1 below.

**[Table 1]**

| | Monomer [g] | | | | | | Initiator [g] | Solvent [g] | Reaction Temperature [°C] | Reaction Time [hr] |
|---|---|---|---|---|---|---|---|---|---|---|
| | PBA | SM | SA | BA | LA | AA | V-65 | NMP | | |
| Example 1-1 | 42 | - | 52 | - | - | 6 | 0.3 | 100 | 75 | 7 |
| Example 1-2 | 42 | - | 52 | - | - | 6 | 0.3 | | 70 | |
| Example 1-3 | 42 | - | 52 | - | - | 6 | 0.3 | | 65 | |
| Example 1-4 | - | 26 | 60 | - | - | 14 | 0.3 | | 75 | |
| Example 1-5 | 46 | - | - | - | 46 | 8 | 0.3 | | 75 | |
| Comparative Example 1-1 | 42 | - | 52 | - | - | 6 | 0.3 | | 85 | |
| Comparative Example 1-2 | 42 | - | 52 | - | - | 6 | 0.1 | | 65 | |
| Comparative Example 1-3 | 70 | - | - | - | - | 30 | 0.3 | | 75 | |
| Comparative Example 1-4 | 45 | - | - | 50 | - | 5 | 0.3 | | 75 | |

In Table 1, PBA is 3-phenoxy benzyl acrylate, SM is styrene, SA is stearyl acrylate, BA is butyl acrylate, LA is lauryl acrylate, AA is acrylic acid, V-65 is 2,2'-azobis-2,4-dimethyl valeronitrile, and NMP is N-methyl pyrrolidone, respectively.

The molecular weight and electrochemical stability of the copolymers prepared in Examples 1-1 to 1-5 and Comparative Examples 1-1 to 1-4 were measured, and the molecular weights are shown in Table 2 below.

In addition, the molecular weights of hydrogenated nitrile rubber (H-NBR) and polyvinylpyrrolidone (PVP), which were common dispersants used to prepare dispersion liquid for comparison, are also shown in Table 2 below.

The molecular weight of the prepared copolymers was measured by gel permeation chromatography (GPC) using tetrahydrofuran (THF) as a solvent.

In addition, the electrochemical stability of the prepared copolymers was measured at a rate of 0.5 mV/s from 0 to 6 V by a linear sweep voltammetry (LSV) measurement using Biologic's electrochemical equipment.

It was confirmed that the copolymers of Examples 1-1 to 1-5 were all within the range of Formula 1 below and thus had excellent electrochemical stability. 0 ≤ (current value measured at applied voltage of 4.2 V - current value measured at applied voltage of 3 V)/(current value measured at applied voltage of 3 V) ≤ 3

**[Table 2]**

| Copolymer | Molecular weight [Mn, g/mol] |
|---|---|
| Example 1-1 | 14,194 |
| Example 1-2 | 20,832 |
| Example 1-3 | 32,580 |
| Example 1-4 | 16,672 |
| Example 1-5 | 13,276 |
| Comparative Example 1-1 | 5,279 |
| Comparative Example 1-2 | 54,843 |
| Comparative Example 1-3 | 14,512 |
| Comparative Example 1-4 | 14,181 |
| H-NBR | 71,744 |
| PVP | 40,127 |

### [Example 2-1]

0.26 g of the copolymer prepared in Example 1-1 as a dispersant, 1.24 g of multi-walled carbon nanotubes (average diameter 10 nm, length 150 µm), 98.5 g of N-methyl pyrrolidone, and 200 g of 0.65 mm zirconia beads were placed to a planetary ball mill. Thereafter, the mixture was dispersed at a rate of 400 rpm for 30 minutes to prepare dispersion liquid with a solid content of 1.5%.

### [Example 2-2]

A dispersion liquid was prepared in the same manner as in Example 2-1, except that the copolymer prepared in Example 1-2 instead of the copolymer prepared in Example 1-1 was used as a dispersant.

### [Example 2-3]

A dispersion liquid was prepared in the same manner as in Example 2-1, except that the copolymer prepared in Example 1-3 instead of the copolymer prepared in Example 1-1 was used as a dispersant.

### [Example 2-4]

A dispersion was prepared in the same manner as in Example 1-4, except that the copolymer prepared in Example 1-2 instead of the copolymer prepared in Example 1-1 was used as a dispersant.

### [Example 2-5]

A dispersion was prepared in the same manner as in Example 1-5, except that the copolymer prepared in Example 1-2 instead of the copolymer prepared in Example 1-1 was used as a dispersant.

### [Comparative Example 2-1]

A dispersion liquid was prepared in the same manner as in Example 2-1, except that the copolymer prepared in Comparative Example 1-1 instead of the copolymer prepared in Example 1-1 was used as a dispersant.

### [Comparative Example 2-2]

A dispersion liquid was prepared in the same manner as in Example 2-1, except that the copolymer prepared in Comparative Example 1-2 instead of the copolymer prepared in Example 1-1 was used as a dispersant.

### [Comparative Example 2-3]

A dispersion liquid was prepared in the same manner as in Example 2-1, except that the copolymer prepared in Comparative Example 1-3 instead of the copolymer prepared in Example 1-1 was used as a dispersant.

### [Comparative Example 2-4]

A dispersion was prepared in the same manner as in Example 2-1, except that the copolymer prepared in Comparative Example 1-4 instead of the copolymer prepared in Example 1-1 was used as a dispersant.

### [Comparative Example 2-5]

A dispersion liquid was prepared in the same manner as in Example 2-1, except that hydrogenated-nitrile butadiene rubber (H-NBR) with a number average molecular weight of 70,000 instead of the copolymer prepared in Example 1-1 was used as a dispersant.

### [Comparative Example 2-6]

A dispersion liquid was prepared in the same manner as in Example 2-1, except that beads with a diameter of 2 mm were used instead of zirconia beads with a diameter of 0.65 mm.

### [Comparative Example 2-7]

A dispersion liquid was prepared in the same manner as in Example 2-1, except that polyvinylpyrrolidone (PVP) with a number average molecular weight of 40,000 instead of the copolymer prepared in Example 1-1 was used as a dispersant.

The measured physical properties of the dispersion liquid of Examples 2-1 to 2-5 and Comparative Examples 2-1 to 2-7 are shown in Table 3 below.

The viscosity of the prepared dispersion liquid was measured with a Haake Mars rheometer, and the particle size was measured with a Mastersizer 3000. The particle size of the dispersion liquid corresponds to the value at D50, and the viscosity of the dispersion liquid corresponds to the value at a shear rate of 10/s.

The dispersion liquid of Examples 2-1 to 2-5 had lower measured viscosity than the dispersion liquid of Comparative Examples 2-2 to 2-5 and Comparative Examples 2-7. In addition, the dispersion liquid of Examples 2-1 to 2-5 had smaller carbon nanotube particle sizes than the dispersion liquid of Comparative Examples 2-3 and 2-5 to 2-7.

Through this, it was confirmed that the copolymers used in the dispersion liquid of Examples 2-1 to 2-5 had relatively excellent performance in dispersing carbon nanotubes compared to the copolymers or homopolymers used in the dispersion liquid of Comparative Examples 2-2 to 2-7.

In addition, as in Comparative Example 2-6, it was confirmed that the properties of the dispersion liquid could be changed depending on the process conditions of the dispersion preparation.

In particular, through comparison of the viscosity and particle size of the copolymers used in the dispersion liquid of Examples 2-1 to 2-5 and the dispersion liquid of Comparative Examples 2-1 to 2-4, in which the number average molecular was only different among the copolymers, it was confirmed that adjusting the number average molecular weight of the copolymers to about 8,000 to 40,000 g/mol was preferable for preparing carbon nanotube dispersion liquid.

**[Table 3]**

| | Dispersion liquid properties | |
|---|---|---|
| | Particle size (@D50) [um] | Dispersion liquid viscosity (@10/s) [cPs] |
| Example 2-1 | 5.2 | 1,215 |
| Example 2-2 | 5.3 | 1,574 |
| Example 2-3 | 5.3 | 1,891 |
| Example 2-4 | 5.3 | 1,342 |
| Example 2-5 | 5.9 | 1,356 |
| Comparative Example 2-1 | 5.3 | 1,128 |
| Comparative Example 2-2 | 5.6 | 5,991 |
| Comparative Example 2-3 | 6.7 | 4,175 |
| Comparative Example 2-4 | 5.9 | 3,682 |
| Comparative Example 2-5 | 12.8 | 4,195 |
| Comparative Example 2-6 | 18.5 | 1,679 |
| Comparative Example 2-7 | 8.6 | 6,264 |

### [Example 3-1]

14 g of the dispersion liquid of Example 2-1, 20 g of cathode active material (NCM622), 8 g of PVdF dissolved at 8% by weight in N-methyl pyrrolidone, and 4 g of N-methyl pyrrolidone were mixed using a planetary centrifugal mixer (ARE-310, Thinky) to prepare a slurry for forming a cathode. At this time, the solid content of the slurry was 50%.

The slurry was applied using a comma coater onto an aluminum foil with a thickness of 20 um. The electrode to which the slurry was applied was dried in an oven at a temperature of 130°C for 12 hours or more and rolled to have a mixture density of 2.4 g/cc. Afterward, a cathode plate was manufactured by vacuum drying at a temperature of 110°C.

After manufacturing a 2032 coin half cell using the cathode plate as the cathode and lithium metal as the anode, alternating current resistance (AC-IR) was evaluated using Biologic's electrochemical equipment. After manufacturing a 2032 coin full cell using the graphite/silicon electrode plate as the anode, charge/discharge voltage properties and lifespan properties were evaluated.

### [Example 3-2]

A cathode plate, coin half cell, and coin full cell were manufactured in the same manner as in Example 3-1, except that 11.2 g of the dispersion liquid of Example 2-1, 19.82 g of cathode active material (NCM622), 10.48 g of PVdF dissolved at 8% by weight in N-methyl pyrrolidone, and 4 g of N-methyl pyrrolidone were mixed using a planetary centrifugal mixer (ARE-310, Thinky) to prepare a slurry for forming a cathode. Afterward, the properties of the coin half cell and coin full cell were evaluated.

### [Example 3-3]

A cathode plate, coin half cell, and coin full cell were manufactured in the same manner as in Example 3-1, except that 9.8 g of the dispersion liquid of Example 2-1, 19.82 g of cathode active material (NCM622), 10.48 g of PVdF dissolved at 8% by weight in N-methyl pyrrolidone, and 4 g of N-methyl pyrrolidone were mixed using a planetary centrifugal mixer (ARE-310, Thinky) to prepare a slurry for forming a cathode. Afterward, the properties of the coin half cell and coin full cell were evaluated.

### [Comparative Example 3-1]

A cathode plate, coin half cell, and coin full cell were manufactured in the same manner as in Example 3-1, except that the dispersion liquid of Comparative Example 2-5 was used instead of the dispersion liquid of Example 2-1.

### [Comparative Example 3-2]

A cathode plate, coin half cell, and coin full cell were manufactured in the same manner as in Example 3-1, except that the dispersion liquid of Comparative Example 2-6 was used instead of the dispersion liquid of Example 2-1.

The composition and properties of the cathode slurry used in Examples 3-1 to 3-3 and Comparative Examples 3-1 and 3-2 are shown in Table 4 below.

The viscosity of the prepared slurry was measured with a Haake Mars rheometer. The viscosity of the slurry corresponds to the value at a shear rate of 10/s.

**[Table 4]**

| | Dispersion liquid type | Dispersion liquid content [%] | Cathode slurry viscosity [cPs@10/sec] |
|---|---|---|---|
| Example 3-1 | Example 2-1 | 100% | 3,591 |
| Example 3-2 | Example 2-1 | 80% | 3,286 |
| Example 3-3 | Example 2-1 | 70% | 3,195 |
| Comparative Example 3-1 | Comparative Example 2-5 | 100% | 4,203 |
| Comparative Example 3-2 | Comparative Example 2-6 | 100% | 4,184 |

As can be seen from the measurement results in Table 4, it was confirmed that the lower the viscosity of the dispersion liquid, the lower the viscosity of the cathode slurry.

The performance of the batteries manufactured in Examples 3-1 to 3-3 and Comparative Examples 3-1 and 3-2 are shown in Table 5 below.

**[Table 5]**

| | Dispersion liquid type | Dispersion liquid content [%] | Alternating current resistance (AC-IR) [Ω] | Capacity maintenance rate @300cyc [%] | Average charging voltage [V] | Average discharging voltage [V] |
|---|---|---|---|---|---|---|
| Example 3-1 | Example 2-1 | 100% | 15 | 84.87 | 3.72 | 3.75 |
| Example 3-2 | Example 2-1 | 80% | 20 | 81.63 | 3.72 | 3.73 |
| Example 3-3 | Example 2-1 | 70% | 25 | 80.27 | 3.73 | 3.73 |
| Comparative Example 3-1 | Comparative Example 2-5 | 100% | 38 | 75.64 | 3.79 | 3.72 |
| Comparative Example 3-2 | Comparative Example 2-6 | 100% | 42 | 70.10 | 3.86 | 3.72 |

As can be seen in Table 5 above, the lower the AC-IR value, the lower the resistance of the electrode, which means improved output properties.

The output properties could be determined by the average voltage during charging and the average voltage during discharging. When a voltage during charging is low, batteries could be charged by consuming less energy. When a voltage during discharging is high, batteries could produce high energy when charged to the same capacity.

As a result of evaluating the performance of the secondary batteries of Examples 3-1 to 3-3 prepared using the dispersion liquid of Example 2-1, it was confirmed that when the resistance value was low, the average charging voltage was low and the average discharge voltage was high.

In addition, as can be seen through the performance evaluation of the secondary batteries of Examples 3-1 to 3-3, which were used in the cathode slurry by adjusting the amount of dispersion liquid used in Example 2-1, it was confirmed that even when the number of carbon nanotubes used was reduced, not only was the resistance low, but the capacity maintenance rate was high.

It was confirmed that the dispersion liquid using the copolymers of the present disclosure had excellent dispersion properties of carbon materials through an appropriate balance of viscosity and carbon nanotube particle size and that the performance of secondary batteries could be improved even when only a relatively small amount of the dispersion liquid was used.

The scope of the present disclosure is indicated by the claims described below rather than the detailed description above. The meaning and scope of the patent claims, and all changes or modified forms derived from the equivalent concept of the present disclosure should be construed as being included in the scope of the present disclosure.

### Industrial Applicability

The copolymer according to the present disclosure is effective in efficiently dispersing carbon materials (particularly, carbon nanomaterials) as a dispersant with only a small amount.

In addition, the dispersion liquid using the dispersant of the present disclosure may be used in various fields (for example, batteries, capacitor electrodes, and so on) that require carbon material dispersion, and in particular, the dispersion liquid may be used in the cathode of secondary batteries to improve the performance of secondary batteries.

## Claims

1. A copolymer fulfilling a criterion outlined in Expression 1 below in a linear sweep voltammetry measurement in which
an applied voltage is increased from 0 to 6 V at a rate of 0.5 mV/s. 0 ≤ (current value measured at applied voltage of 4.2 V - current value measured at applied voltage of 3 V)/(current value measured at applied voltage of 3 V) ≤ 3

2. The copolymer of claim 1, wherein the copolymer comprises:
one or more monomer units selected from the group consisting of an acrylate-based monomer unit containing one or more substituted or unsubstituted aromatic rings and a vinyl-based monomer unit containing one or more substituted or unsubstituted aromatic rings;
an acrylate-based monomer unit containing linear or branched aliphatic hydrocarbons having 5 to 22 carbon atoms; and
a polar monomer unit containing one or more selected from the group consisting of cyano (CN), pyrrolidone (NC₄H₆O), carboxylic acid (COOH), caprolactam (C₅H₁₀CNO), morpholine (C₄H₈NO), and oxazolidone (C₃H₄NO₂).

3. The copolymer of claim 1, wherein based on 100 mol% of the copolymer, the copolymer comprises:
5 mol% or more and 60 mol% or less of one or more monomer units selected from the group consisting of an acrylate-based monomer unit containing one or more substituted or unsubstituted aromatic rings and a vinyl-based monomer unit containing one or more substituted or unsubstituted aromatic rings;
5 mol% or more and 80 mol% or less of an acrylate-based monomer unit containing linear or branched aliphatic hydrocarbons having 5 to 22 carbon atoms; and
5 mol% or more and 60 mol% or less a polar monomer unit containing one or more selected from the group consisting of cyano (CN), pyrrolidone (NC₄H₆O), carboxylic acid (COOH), caprolactam (C₅H₁₀CNO), morpholine (C₄H₈NO), and oxazolidone (C₃H₄NO₂).

4. The copolymer of claim 1 represented by Formula 1 below. 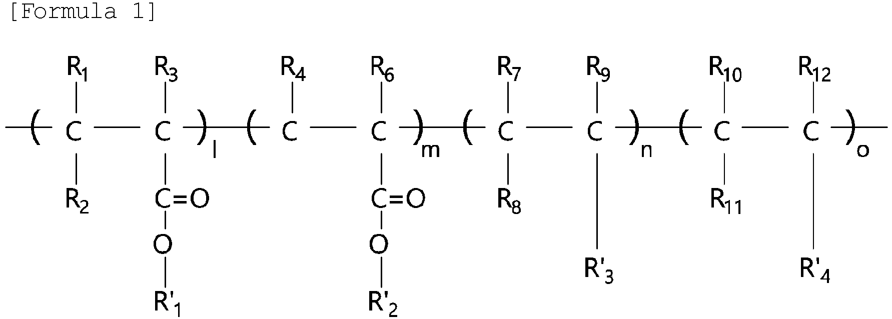
wherein in Formula 1 above, R₁ to R₁₂ are the same or different from each other,
R₁ to R₁₂ are each independently hydrogen or a linear or branched hydrocarbon having 1 to 4 carbon atoms,
R'₁ is a linear or branched aliphatic hydrocarbon having 5 to 22 carbon atoms,
R'₂ comprises one or more substituted or unsubstituted aromatic rings,
R'₃ is one or more selected from the group consisting of cyano (CN), pyrrolidone (NC₄H₆O), carboxylic acid (COOH), caprolactam (C₅H₁₀CNO), morpholine (C₄H₈NO), and oxazolidone (C₃H₄NO₂),
R'₄ comprises one or more substituted or unsubstituted aromatic rings, and
5 mol%≤l≤80 mol%, 0 mol%≤m≤60 mol%, 5 mol%≤n≤60 mol%, and 0 mol%≤o≤60 mol%.
(However, both m and o cannot be 0 mol%)

5. The copolymer of claim 4, wherein R'₁ comprises one or more selected from the group consisting of n-pentyl, n-hexyl, n-heptyl, n-octyl, 2-ethylhexyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-icosyl, n-henicosyl, n-docosyl, iso-pentyl, iso-heptyl, iso-octyl, iso-nonyl, iso-decyl, iso-undecyl, iso-dodecyl, iso-tridecyl, iso-tetradecyl, iso-pentadecyl, iso-cetyl, iso-hexadecyl, iso-heptadecyl, iso-stearyl, iso-octadecyl, iso-nonadecyl, iso-icosyl, iso-henicosyl, and iso-docosyl.

6. The copolymer of claim 4, wherein R'₂ and R'₄ are the same or different from each other, and
R'₂ and R'₄ each independently comprise one or more selected from the group consisting of substituted or unsubstituted benzyl, phenyl, phenoxy, naphthalene, anthracene, and pyrene.

7. The copolymer of claim 4, wherein R'₂ comprises one or more selected from the group consisting of 3-phenoxy benzyl, σ-phenyl phenoxy ethyl, biphenyl methyl, 1-naphthyl, 2-naphthyl, 9-anthracene methyl, and 1-pyrene methyl, and
R'₄ comprises phenyl.

8. The copolymer of claim 4, wherein a monomer containing R'₂ comprises one or more selected from the group consisting of benzyl acrylate, 3-phenoxy benzyl acrylate, σ-phenyl phenoxy ethyl acrylate, σ-phenyl phenoxy ethyl methacrylate, (1-pyrene) 2-methyl-2-propenoate, 1-naphthyl acrylate, 1-naphthyl methacrylate, 2-naphthyl acrylate, 2-naphthyl methacrylate, 9-anthracene methyl acrylate, and 9-anthracene methyl methacrylate, and
a monomer containing R'₄ comprises styrene.

9. The copolymer of claim 1, wherein the copolymer is a random copolymer or a block copolymer.

10. The copolymer of claim 1, wherein the copolymer has a number average molecular weight in a range of 8,000 or more and 40,000 or less.

11. A dispersant comprising the copolymer of any one of claims 1 to 10.

12. A dispersion liquid comprising the copolymer of any one of claims 1 to 10; and a solvent.

13. The dispersion liquid of claim 12,
wherein the solvent comprises one or more selected from the group consisting of N-methyl-2-pyrrolidone (NMP), N-ethyl-2-pyrrolidone (NEP), dimethylformamide (DMF), dimethylacetamide (DMAc), dimethyl sulfoxide (DMSO), γ-butyrolactone, ethyl acetate, propyl acetate, ethanol, isopropyl alcohol, and deionized water.

14. The dispersion liquid of claim 12, further comprising a carbon material.

15. The dispersion liquid of claim 14, wherein the carbon material comprises one or more selected from the group consisting of graphite, activated carbon, carbon black, single-walled carbon nanotubes, multi-walled carbon nanotubes, fullerene, and graphene.

16. The dispersion liquid of claim 15, wherein when the dispersion liquid has a solid content of 1.5% by weight, the viscosity of the dispersion liquid at a shear rate of 10/s is in a range of 2,000 cps or less, and
the single-walled carbon nanotubes, the multi-walled carbon nanotubes, or a combination thereof dispersed in the dispersion liquid has a median particle size (D50) of 6 µm or less.

17. A slurry composition for a cathode comprising:
the copolymer of any one of claims 1 to 10; and
a cathode active material.

18. A cathode comprising:
a current collector; and
the copolymer of any one of claims 1 to 10 formed on the current collector.

19. A secondary battery comprising the cathode of claim 18.
